Europäisches Patentamt

European Patent Office

Office européen des brevets

(19)

(11) Numéro de publication : **0 230 200**
**B1**

(12) **FASCICULE DE BREVET EUROPÉEN**

(45) Date de publication du fascicule du brevet :
20.09.89

(51) Int. Cl.⁴ : **B 23 B 31/04**

(21) Numéro de dépôt : **86440010.6**

(22) Date de dépôt : **10.02.86**

(54) **Dispositif de réglage axial d'outils de machines-outils.**

(30) Priorité : **02.12.85 FR 8518144**

(43) Date de publication de la demande :
**29.07.87 Bulletin 87/31**

(45) Mention de la délivrance du brevet :
**20.09.89 Bulletin 89/38**

(84) Etats contractants désignés :
**AT BE CH DE GB IT LI LU NL SE**

(56) Documents cités :
**EP—A— 0 112 788**
**DE—A— 2 234 389**
**FR—A— 2 217 110**
**GB—A— 29 908**
**GB—A— 649 750**
**GB—A— 2 099 904**
**GB—A— 2 155 823**
**US—A— 2 384 600**

(73) Titulaire : **Pfalzgraf, Emile**
**7, rue de Neuwiller**
**F-67330 Bouxwiller (FR)**

(72) Inventeur : **Pfalzgraf, Emile**
**7, rue de Neuwiller**
**F-67330 Bouxwiller (FR)**

(74) Mandataire : **Nuss, Pierre**
**10, rue Jacques Kablé**
**F-67000 Strasbourg (FR)**

EP 0 230 200 B1

Jouve, 18, rue St-Denis, 75001 Paris, France

## Description

La présente invention concerne le domaine de la fabrication des porte-outils monoblocs, modulaires, ou autres, pour le préréglage en longueur des outils et a pour objet un dispositif de réglage axial d'outils.

Actuellement, le réglage axial d'outils est généralement réalisé au moyen de douilles de réglage montées dans les porte-outils. Cependant, il n'existe pas de dispositif simple, universel, performant et flexible, de bonne qualité et permettant directement un réglage en longueur des outils dans les porte-outils.

La nécessité d'un réglage axial d'outils est surtout d'un grand intérêt dans le cas d'utilisation de machines multibroches usinant des pièces identiques en même temps. Ainsi, pour respecter strictement les opérations des différentes pièces, à savoir le fraisage, l'alésage, le dressage, le contournage, etc..., chaque outil doit être préréglé en longueur et d'une manière stricte d'une broche à l'autre.

Les dispositifs existant actuellement ne permettent pas un tel réglage, de manière simple et avec un nombre réduit de pièces en mouvement.

On connaît, en particulier, par DE-A-2 234 389 des outils de type « têtes amovibles » ou « embouts d'alésage » se fixant dans un support attachement et formant un ensemble correspondant à une barre d'alésage. La fixation de ces embouts ou têtes à aléser est réalisée par l'intermédiaire d'une queue cylindrique et d'un cône, ledit embout étant appliqué sur une face et la queue étant fixée par deux vis à bout conique, son entraînement étant réalisé par deux tenons. Un tel montage est, cependant, rigide après fixation et ne peut en aucun cas être réglé axialement. En outre, la partie conique présente une longueur relativement faible ne permettant pas un centrage long de la pièce mobile qui n'est, par ailleurs, pas guidée avec blocage en rotation.

La présente invention a pour but de pallier ces inconvénients.

Elle a, en effet, pour objet un dispositif de réglage axial d'outils, essentiellement constitué par un attachement pourvu d'un emmanchement de montage dans les broches de machines du type cône standard américain, cône morse, ou à queue cylindrique, et autres, et logeant, dans son extrémité opposée à l'emmanchement, une pièce mobile du type monobloc ou du type modulaire de réception d'un outil, le logement de réception de la pièce mobile de l'attachement étant sous forme de deux alésages de diamètre différent, dont le plus grand s'étend à partir de la face de l'attachement et est relié au plus petit à l'intérieur dudit attachement, où les alésages présentent une longueur telle qu'elle permet un centrage long de la pièce mobile, où l'attachement est pourvu, au niveau de plus grand alésage, d'une part, d'au moins deux vis de blocage et de réglage de la pièce mobile coopérant avec des rainures inclinées inversées de forme sphérique de la pièce mobile, et, d'autre part, d'au moins un élément de guidage monté en saillie dans l'un des alésages et coopérant avec une rainure correspondante de la pièce mobile, et où les rainures sont parallèles à l'axe central du dispositif et leur inclinaison s'étend dans la direction de l'axe central.

L'invention sera mieux comprise grâce à la description ci-après, qui se rapporte à un mode de réalisation préféré, donne à titre d'exemple non limitatif, et expliqué avec référence au dessin schématique annexé, dans lequel :

la figure 1 est une vue en élévation latérale et en coupe suivant A-A de la figure 2 d'un dispositif conforme à l'invention ;

la figure 2 est une vue en élévation frontale suivant F de la figure 1, et

la figure 3 est une vue en plan d'une pièce mobile de type monobloc.

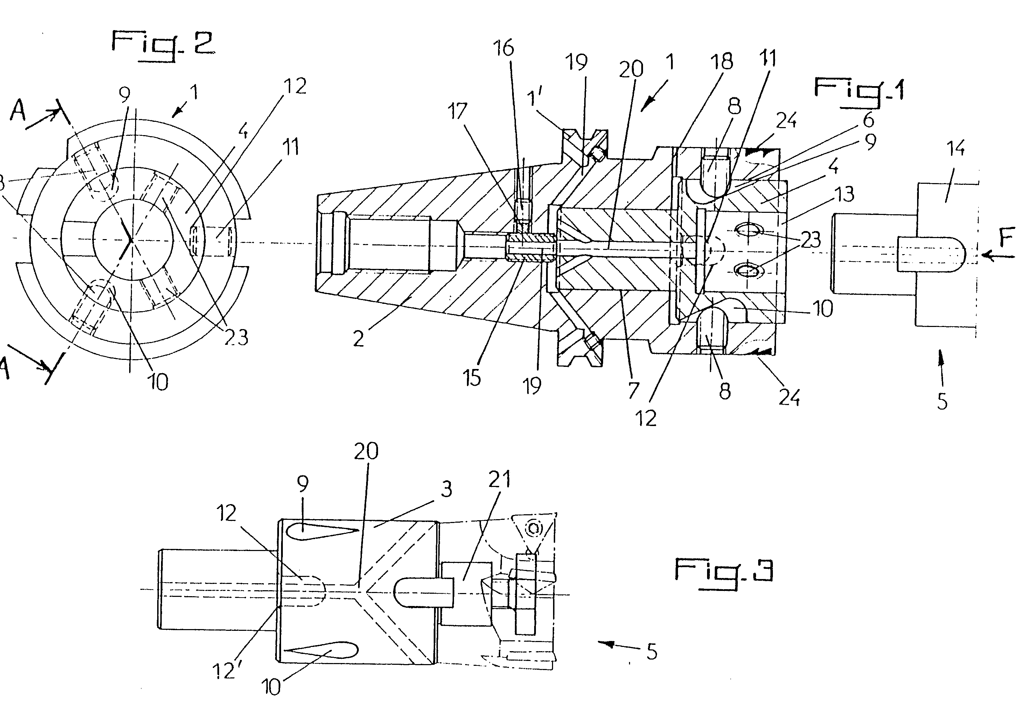

La figure 1 du dessin annexé représente, à titre d'exemple, un dispositif de réglage axial d'outils, qui est essentiellement constitué par un attachement 1 pourvu d'un emmanchement 2 de montage dans les broches de machines du type cône standard américain, cône morse, ou à queue cylindrique, ou autres, et logeant dans son extrémité opposée à l'emmanchement 2 une pièce mobile du type monobloc 3 (figure 3) ou du type modulaire 4 (figures 1 et 2) de réception d'un outil 5.

Le logement de réception de la pièce mobile 3 ou 4 de l'attachement 1 est sous forme de deux alésages 6 et 7 de diamètre différent, dont le plus grand 6 s'étend à partir de la face de l'attachement 1 et est relié au plus petit 7, à l'intérieur de l'attachement 1. Conformément à l'invention, ces alésages 6 et 7 présentent une longueur telle qu'ils permettent un centrage long de la pièce mobile 3 ou 4. En outre, l'attachement 1 est muni, au niveau de l'alésage 6, d'au moins deux vis 8 de blocage et de réglage de la pièce mobile 3 ou 4, ces vis 8 coopérant avec des rainures inclinées inversées de forme sphérique 9 et 10 prévues sur la pièce mobile 3 ou 4, et l'un des alésages 6 ou 7 est pourvu d'au moins un élément de guidage 11, qui est monté en saillie dans ledit alésage et qui coopère avec une rainure correspondante 12 de la pièce 3 ou 4.

L'attachement 1 représenté au dessin annexé est muni d'un emmanchement 2 au cône standard américain muni d'une collerette pour le changement automatique des porte-outils sur centres d'usinage. Cet emmanchement 2 pourrait également être sous forme d'une autre queue ou emmanchement en fonction de la broche de la machine. L'attachement 1, qui fait corps avec la broche de la machine, peut être changé manuellement ou par un changeur automatique, ou par un robot, ou dispositif analogue.

La pièce mobile 3 du type monobloc est une pièce permettant un montage direct d'un outil, par exemple d'une fraise, ou qui fait corps avec l'outil, par exemple une barre d'alésage, tandis que la pièce mobile 4 du type modulaire peut recevoir, dans un alésage 13, tous types d'adaptateurs, de porte-outils, d'éléments, de barres d'alésage, ou encore de têtes à aléser 14 (figure 1).

La longueur des alésages 6 et 7 est nécessaire pour permettre un centrage long des pièces mobiles 3 ou 4 et donc obtenir, après assemblage, de très bonnes tolérances de concentricité.

Les vis 8 de blocage sont avantageusement des vis à bout sphérique à pas fin, et sont montées, de préférence, à un écartement angulaire de 120° l'une par rapport à l'autre.

L'élément de guidage 11 est avantageusement sous forme d'un pion ou d'une pige rectifiée, ou analogue, montée dans l'alésage 6 ou 7, dure ou collée et disposée à équidistance des vis 8, de préférence, à un écartement angulaire des vis 8 égal à 120° (figure 2). Cet élément 11 dépasse à l'intérieur de l'alésage 6 ou 7 d'une hauteur légèrement inférieure à la profondeur de la rainure 12 correspondante de la pièce 3 ou 4.

Selon une autre caractéristique de l'invention, l'attachement 1 est muni, concentriquement dans son emmanchement 2, d'une vis arrière de butée 15 débouchant dans l'alésage 7 et pouvant être bloquée par une vis radiale 16 avec interposition d'un élément 17 en bronze, ou autre matière.

L'attachement 1 peut être muni, en outre, d'un perçage radial 18 débouchant au niveau de la jonction entre les alésages 6 et 7 et formant un conduit d'évacuation d'air comprimé, ainsi qu'éventuellement de canaux de lubrification centrale 19 dans la face de la collerette 1' ou dans la vis arrière de butée 15, ces canaux coopérant avec des canaux 20 de la pièce mobile 3 ou 4 (figures 1 et 3).

La pièce mobile du type monobloc 3 (figure 3) ainsi que la pièce 4 du type modulaire (figure 1), sont constituées chacune sous forme d'un cylindre étagé dont les diamètres correspondent à ceux des alésages 6 et 7 et dont la partie de plus grand diamètre porte, d'une part, les rainures inclinées inversées de forme sphérique 9 et 10, qui sont disposées angulairement de manière identique aux vis 9, de préférence à 120° l'une par rapport à l'autre, et, d'autre part, débouchant sur sa face de liaison avec la partie de plus petit diamètre, ou sur le plus petit diamètre, une rainure 12 coopérant avec l'élément de guidage 11, cette rainure 12 étant pourvue, en outre, d'un chanfrein d'entrée 12' (figures 1 et 3).

La pièce mobile de type monobloc 3 est munie à l'avant, de manière connue, d'un alésage pour le centrage d'un porte-fraise 21, d'un porte-pince, ou de tout autre dispositif permettant le montage ou la fixation des outils coupants, qui peuvent être des outils combinés à plusieurs plaquettes, ou d'autres outils tels que des barres d'alésage combinées, etc...

La pièce mobile de type modulaire 4 présente un alésage 13 de réception d'éléments modulaires tels que des allonges, des réductions, des adaptateurs et autres supports d'outils ou pièces. Cet alésage 13 peut être remplacé par tout autre dispositif de fixation d'outils.

La pièce 4 est munie, outre des rainures inclinées 9 et 10 et de la rainure de positionnement 12, de deux vis à bout sphérique 23, avantageusement situées diamétralement à l'opposé des rainures 9 et 10, et destinées à la fixation des éléments adaptateurs, ou analogues (figures 1 et 2). Ces vis 23 coopèrent, de manière connue, avec des trous sphériques prévus dans lesdits éléments, adaptateurs, ou autres.

Pour permettre une détection rapide du sens de déplacement de réglage des pièces 3 ou 4 au moyen des vis 8, il est prévu sur la circonférence de la partie avant de l'attachement 1, près des trous de chaque vis 8, une flèche 24 indiquant le sens de déplacement correspondant.

La rainure 9 permet de réaliser le déplacement en avant de la pièce mobile 3 ou 4, tandis que la rainure 10 permet leur déplacement en sens inverse. Ainsi, en serrant la vis 8 affectée à la première rainure 9 et en desserrant simultanément la vis 8 affectée à l'autre rainure 10, la pièce mobile 3 ou 4 se déplace vers l'avant, tandis qu'une manoeuvre inverse simultanée desdites vis 8 provoque un déplacement de retrait de la pièce 3 ou 4 en direction de l'attachement 1. La manoeuvre simultanée des vis permet de maintenir leur contact avec le fond des rainures 9 et 10, simplifiant ainsi le blocage final au moyen des mêmes vis 8 par création de deux efforts de serrage opposés immobilisant parfaitement la pièce 3 ou 4, l'élément de guidage 11 coopérant avec la rainure 12 garantissant un centrage parfait et continu des vis 8 dans les rainures 9 et 10.

Bien entendu, chaque vis 8 peut également être manoeuvrée, séparément, le réglage dans un sens ou dans l'autre étant effectué, après desserrage d'une vis, par manoeuvre de l'autre vis, et blocage de la première après atteinte du réglage désiré.

Grâce à ce mode de réalisation, il est possible d'obtenir une qualité de concentricité très bonne et parfaitement reproductible. En outre, le dispositif de préréglage ainsi obtenu est très précis et présente une course relativement faible, de quelques millimètres à peine, permettant de rattraper tous les défauts de longueur des broches, de tolérance des cônes ou des outils coupants, et après affûtage.

L'invention est plus particulièrement applicable au réglage axial d'outils de machines-outils à plusieurs broches de tous types, y compris les centres d'usinage multibroches, et à tous dispositifs nécessitant un préréglage en longueur très strict des outils.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Dispositif de réglage axial d'outils, essentiellement constitué par un attachement (1) pourvu d'un emmanchement (2) de montage dans les broches de machines du type cône standard américain, cône morse, ou à queue cylindrique, et autres, et logeant, dans son extrémité opposée à l'emmanchement (2), une pièce mobile du type monobloc (3) ou du type modulaire (4) de réception d'un outil (5), le logement de réception de la pièce mobile (3 ou 4) de l'attachement (1) étant sous forme de deux alésages (6 et 7) de diamètre différent, dont le plus grand (6) s'étend à partir de la face de l'attachement (1) et est relié au plus petit (7) à l'intérieur dudit attachement (1), où les alésages (6 et 7) présentent une longueur telle qu'elle permet un centrage long de la pièce mobile (3 ou 4), où l'attachement (1) est pourvu, au niveau du plus grand alésage (6), d'une part, d'au moins deux vis (8) de blocage et de réglage de la pièce mobile (3 ou 4) coopérant avec des rainures inclinées inversées de forme sphérique (9 et 10) de la pièce mobile (3 ou 4), et, d'autre part, d'au moins un élément de guidage (11) monté en saillie dans l'un des alésages (6 ou 7) et coopérant avec une rainure correspondante (12) de la pièce mobile (3 ou 4), et où les rainures (9 et 10) sont parallèles à l'axe central du dispositif et leur inclinaison s'étend dans la direction de l'axe central.

2. Dispositif, suivant la revendication 1, où les vis (8) de blocage sont avantageusement des vis à bout sphérique à pas fin, et sont montées, de préférence, à un écartement angulaire de 120° l'une par rapport à l'autre.

3. Dispositif, suivant l'une quelconque des revendications 1 et 2, où l'élément de guidage (11) est avantageusement sous forme d'un pion ou d'une pige rectifiée, ou analogue, montée dans l'alésage (6 ou 7) dure ou collée et disposée à équidistance des vis (8), de préférence à un écartement angulaire des vis (8) égal a 120°.

4. Dispositif, suivant la revendication 1, où l'attachement (1) est muni, concentriquement dans son emmanchement (2), d'une vis arrière de butée (15) débouchant dans l'alésage (7) et pouvant être bloquée par une vis radiale (16) avec interposition d'un élément (17) en bronze, ou autre matière.

5. Dispositif, suivant l'une quelconque des revendications 1 et 4, où l'attachement (1) est muni, en outre, d'un perçage radial (18) débouchant au niveau de la jonction entre les alésages (6 et 7) et formant un conduit d'évacuation d'air comprimé, ainsi qu'éventuellement de canaux de lubrification centrale (19) dans la face de la collerette (1') ou dans la vis arrière de butée (15), ces canaux coopérant avec des canaux (20) de la pièce mobile (3 ou 4).

6. Dispositif, suivant l'une quelconque des revendications 1 à 3, où la pièce mobile du type monobloc (3) ainsi que la pièce (4) de type modulaire sont constituées chacune sous forme d'un cylindre étagé dont les diamètres correspondent à ceux des alésages (6 et 7), et dont la partie de plus grand diamètre porte, d'une part, les rainures inclinées inversées de forme sphérique (9 et 10), qui sont disposées angulairement de manière identique aux vis (8), de préférence, a 120° l'une par rapport à l'autre, et, d'autre part, débouchant sur sa face de liaison avec la partie de plus petit diamètre, ou sur le plus petit diamètre, une rainure (12) coopérant avec l'élément de guidage (11), cette rainure (12) étant pourvue, en outre, d'un chanfrein d'entrée (12').

7. Dispositif. suivant l'une quelconque des revendications 1, 3, 5 et 6, où la pièce (4) est munie, outre des rainures inclinées (9 et 10) et de la rainure de positionnement (12), de deux vis à bout sphérique 23) avantageusement situées diamétralement à l'opposé des rainures (9 et 10), et destinées à la fixation des éléments adaptateurs, ou analogues.

8. Dispositif, suivant l'une quelconque des revendications 1, 4 et 5, où pour permettre une détection rapide du sens de déplacement de réglage des pièces (3 ou 4) au moyen des vis (8), il est prévu sur la circonférence de la partie avant de l'attachement (1), près des trous de chaque vis (8), une flèche (24) indiquant le sens de déplacement correspondant.

9. Dispositif, suivant l'une quelconque des revendications 1 et 3 à 7, où les alésages (6 et 7) de l'emmanchement (1) sont remplacés par un alésage unique très long et les pièces mobiles (3 et 4) se présentent sous forme d'un cylindre de diamètre identique à celui de l'alésage unique.

## Claims

1. A device for the axial adjustment of tools, essentially formed by a fitting (1) provided with a nose (2) for installation in the spindles of machines of the standard American taper type, Morse taper type or with a cylindrical tail, and others, and housing, in its end remote from the nose (2), a moving part of the monobloc type (3) or modular type (4) for receiving a tool (5), the housing for receiving the moving part (3 or 4) of the fitting (1) being in the form of two bores (6 and 7) of different diameters, the greater (6) extending from the face of the fitting (1) and being connected to the smaller (7) inside said fitting (1), wherein the bores (6 and 7) have a length such that it allows longitudinal centring of the moving part (3 or 4), wherein the fitting (1) is provided, in the region of the greater bore (6), on the one hand, with at least two screws (8) for locking and adjusting the moving part (3 or 4) which cooperate with reversed, spherical inclined grooves (9 and 10) in the moving part (3 or 4) and, on the other hand, with at least one guiding element (11) projecting into one of the bores (6 or 7) and co-operating with a corresponding groove (12) in the moving part (3 or 4) and wherein the grooves (9 and 10) are parallel to the central axis of the device and are inclined in the direction of the central axis.

2. A device according to Claim 1, wherein the lock screws (8) are advantageously fine pitch, spherically ended screws and are preferably fitted at an angular distance of 120° from one another.

3. A device according to any one of Claims 1 and 2, wherein the guiding element (11) is advantageously in the form of a pawn or a straightened rod or the like installed in the rigid bore (6 or 7) or stucked and arranged equidistantly from the screws (8), preferably at an angular distance from the screws (8) of 120°.

4. A device according to Claim 1, wherein the fitting (1) is equipped, concentrically in its nose (2), with a rear stop screw (15) which issues in the bore (7) and can be locked by a radial screw (16) with interposition of an element (17) made of bronze or other material.

5. A device according to any one of Claims 1 and 4, wherein the fitting (1) is moreover provided with a radial perforation (18) issuing in the region of the joint between the bores (6 and 7) and forming an outlet conduit for compressed air and optionally with central lubricating ducts (19) in the face of the flange (1') or in the rear stop screw (15), these ducts co-operating with the ducts (20) in the moving part (3 or 4).

6. A device according to any one of Claims 1 to 3, wherein the moving part of the monobloc type (3) as well as the part (4) of modular type are each made up in the form of a staged cylinder whose diameters correspond to those of the bores (6 and 7) and whose part of greater diameter bears, on the one hand, reversed spherical inclined grooves (9 and 10) which are arranged angularly, identically to the screws (8), preferably at 120° to one another, and, on the other hand, a groove (12) which issues at the interface with the part of smaller diameter or at the smaller diameter and co-operates with the guiding element (11), this groove (12) also being provided with an inlet bevel (12').

7. A device according to any one of Claims 1, 3, 5 and 6, wherein the part (4) is provided with two spherically ended screws (23) which are advantageously located diametrically opposite the grooves (9 and 10) and are intended for fixing adaptor elements or the like, in addition to the inclined grooves (9 and 10) and the positioning groove (12).

8. A device according to any one of Claims 1, 4 and 5, wherein, to allow rapid detection of the direction of adjusting movement of the parts (3 or 4) by means of the screws (8), an arrow (24) indicating the corresponding direction of travel is provided on the circumference of the front portion of the fitting (1) close to the holes for each screw (8).

9. A device according to any one of Claims 1 and 3 to 7, wherein the bores (6 and 7) in the nose (2) are replaced by a very long, single bore and the moving parts (3 and 4) have the form of a cylinder of which the diameter is equal to that of the single bore.

**Patentansprüche**

1. Axiale Regelungsvorrichtung von Werkzeugen in Werkzeugmaschinen, im wesentlichen bestehend aus einem Halter (1), versehen mit einem Schaft (2) zur Montage in Werkzeugspindeln vom Typ des amerikanischen Einheitskegels, Morsekegels oder mit Zylinderschaft oder ähnlichem, und in der in dem dem Schaft (2) gegenüberliegenden Ende ein bewegliches Stück vom Monoblock- (3) oder Modulartyp (4) zur Aufnahme eines Werkzeugs (5) sitzt, wobei der Sitz zur Aufnahme des beweglichen Stücks (3 oder 4) des Halters (1) in Form von zwei Bohrungen (6 und 7) mit unterschiedlichem Durchmesser ausgeführt ist, wovon die größere (6) sich von der Frontfläche des Halters (1) aus erstreckt und mit der kleineren (7) innerhalb des Halters (1) verbunden ist, bei welcher die Bohrungen (6 und 7) eine Länge aufweisen, die eine lange Zentrierung des beweglichen Stücks (3 oder 4) erlaubt, bei welcher der Halter (1) in Höhe der größeren Bohrung (6), einerseits, mindestens zwei Schrauben (8) zur Feststellung und Einstellung des beweglichen Stücks (3 oder 4), die mit gegenläufigen, kugeligen Auskehlungen (9 und 10) des beweglichen Stücks (3 oder 4) zusammenwirken, und andererseits, mindestens ein Führungselement (11) besitzt, das vorstehend in einer der Bohrungen (6 und 7) befestigt ist und mit einer entsprechenden Auskehlung (12) des beweglichen Stücks (3 oder 4) zusammenwirkt, und bei welcher die Auskehlungen (9 oder 10) zu der Mittelachse der Vorrichtung parallel sind und ihre Neigung sich in Richtung der Mittelachse erstreckt.

2. Vorrichtung nach Anspruch 1, bei welcher die Schrauben (8) zur Feststellung vorteilhaft Schrauben mit kugeligem Ansatz und Feingewinde, und vorzugsweise zueinander in einem Winkelabstand von 120° montiert sind.

3. Vorrichtung nach einem der Ansprüche 1 und 2, bei welcher das Führungselement (11) vorteilhaft in Form eines Metallstücks oder zugeschliffenen Stabs oder ähnlichem ausgebildet ist, der in der Bohrung (6 oder 7) schwergängig oder enganliegend und in gleichem Abstand von den Schrauben (8), vorzugsweise in einem Winkelabstand von den Schrauben (8) von 120° angeordnet ist.

4. Vorrichtung nach Anspruch 1, bei welcher der Halter (1), konzentrisch in seinem Schaft (2), mit einer hinteren Anschlagschraube (15) versehen ist, welche in die Bohrung (7) mündet und durch eine Radialschraube (16) mit Zwischenlage eines Elements (17) aus Bronze oder anderem Material verklemmt werden kann.

5. Vorrichtung nach einem der Ansprüche 1 und 4, bei welcher der Halter (1), außerdem, mit einer Radialbohrung (18) versehen ist, die in Höhe der Verbindung zwischen den Bohrungen (6 und 7) mündet und eine Abzugsleitung für Druckluft sowie eventuell Leitungen für die Zentralschmierung (19) in der Seite des Kragens (1') oder in der hinteren Anschlagschraube (15) bildet, wobei diese Leitungen mit den Leitungen (20) des beweglichen Stücks (3 oder 4) zusammenwirken.

6. Vorrichtung nach einem der Ansprüche 1 bis 3, bei welcher das bewegliche Stück vom Monoblock-Typ (3) sowie das Stück (4) vom Modulartyp jeweils als abgestufter Zylinder ausgebildet sind, dessen Durchmesser denen der Bohrungen (6 und 7) entspricht, und dessen Teil mit dem größeren Durchmesser, einerseits, die gegenläufigen, kugeligen Auskehlungen (9 und 10) trägt, die im Winkel identisch mit den Schrauben (8), vorzugsweise mit 120° zueinander angeordnet sind, und andererseits an ihrer Fläche der Verbindung mit dem Teil des kleineren Durchmessers, oder an dem kleineren Durchmesser, münden, wobei eine Auskehlung (12) mit dem Führungselement (11) zusammenwirkt, und diese Auskehlung (12) außerdem an ihrem Eingang mit einer Fase (12') versehen ist.

7. Vorrichtung nach einem der Ansprüche 1, 3, 5 und 6, bei welcher das Stück (4), außer mit den geneigten Auskehlungen (9 und 10) und der Stellnut (12), mit zwei Schrauben mit kugeligem Ansatz (23) versehen ist, die vorteilhaft den Auskehlungen (9 und 10) diametral gegenüberliegen und zur Befestigung der Adapterelemente oder ähnlichem dienen.

8. Vorrichtung nach einem der Ansprüche 1, 4 und 5, bei welcher, um ein schnelles Auffinden der Verstellrichtung zur Regelung der Stücke (3 oder 4) mit Hilfe der Schrauben (8) zu ermöglichen, an dem Umfang des Vorderteils des Halters (1), in der Nähe der Löcher jeder Schraube (8), ein Pfeil (24) vorgesehen ist, der die entsprechende Verstellrichtung anzeigt.

9. Vorrichtung nach einem der Ansprüche 1 und 3 bis 7, bei welcher die Bohrungen (6 und 7) des Schaftes (2) durch eine einzige, sehr lange Bohrung ersetzt werden und die beweglichen Stücke (3 und 4) sich als Zylinder mit gleichem Durchmesser wie der der einzigen Bohrung darstellen.

Fig. 2

Fig. 1

Fig. 3

EP 0 230 200 B1

A

A

F

5

1

9

12

8

11

4

10

23

16

19

20

1

18

11

17

1'

8

24

6

9

4

13

23

14

10

2

15

19

7

12

8

24

5

20

9

12

3

21

12'

10

5